# EUROPÄISCHE PATENTSCHRIFT

(11) **EP 2 977 241 B1**
(45) Veröffentlichungstag und Bekanntmachung des Hinweises auf die Patenterteilung: **14.06.2017**
(21) Anmeldenummer: 15001108.8
(22) Anmeldetag: 16.04.2015
(51) Int. Cl.: B60G 21/055, B60G 11/44, B60G 3/16, B60G 3/28, B60G 11/20, F16F 1/16

(54) **STABILISATOR ODER STABILENKER FÜR EIN FAHRWERK EINES KRAFTFAHRZEUGS**
STABILIZER OR STABLE STEERING FOR A CHASSIS OF A MOTOR VEHICLE
STABILISATEUR OU BRAS DE GUIDAGE POUR UN CHÂSSIS D'UN VÉHICULE AUTOMOBILE

(30) Priorität: 22.07.2014 DE 102014010889
(43) Veröffentlichungstag der Anmeldung: 27.01.2016
(73) Patentinhaber: MAN Truck & Bus AG, 80995 München (DE)
(72) Erfinder: Sattler, Steve, 81375 München (DE); Toledano Saez, Sara, 85057 Ingolstadt (DE)
(74) Vertreter: v. Bezold & Partner Patentanwälte - PartG mbB

(56) Entgegenhaltungen:
- EP-A1- 2 070 743
- DE-A1-102012 009 564
- FR-A1- 2 626 819
- FR-A1- 2 836 093
- JP-A- S6 060 023
- JP-A- 2004 106 654
- JP-U- H0 364 804
- JP-U- S5 737 006
- US-A- 4 696 489
- US-A1- 2009 079 177
- Turner Motorsport: "E9X M3 Turner Motorsport Racing Blade-Style Front Sway Bar Kit", , XP002751940, Gefunden im Internet: URL:http://www.turnermotorsport.com/p-1769 73-e9x-m3-turner-motorsport-racing-blade-s tyle-front-sway-bar-kit.aspx [gefunden am 2015-12-08]
- Proven Wicked: "Proven Wicked SwitchBLADE Swaybar", camara5 , 22. Februar 2012 (2012-02-22), XP002751941, Gefunden im Internet: URL:http://www.camaro5.com/forums/showthre ad.php?t=204687 [gefunden am 2015-12-08]
- Nigel PETRIE: "The Final Entry: Engineered to Slide Hilux", SpeedHunters , 30. Oktober 2013 (2013-10-30), Seite 24PP, XP002751942, Gefunden im Internet: URL:http://www.speedhunters.com/2013/10/th e-final-entry-engineered-to-slide-hilux/ [gefunden am 2015-12-08]
- Tarett Engineering Competition Suspension Components: "997 & Cayman Flont Bladed Sway Bar Assembly (Bladed Swaybar Kit, Front)", , XP002751943, Gefunden im Internet: URL:http://www.tarett.com/items/986-987-pr oducts/986-987-981-suspension/986-987-981- swaybars~drop-links-/997-front-swaybar-ass y-detail.htm [gefunden am 2015-12-08]
- Tarett Engineering Competition Suspension Components: "997 Rear Bladed Sway Bar Assembly (Bladed Swaybar Kit, Rear)", , XP002751944, Gefunden im Internet: URL:http://www.tarett.com/items/996-997-pr oducts/996-997-991-suspension/996-997-991- swaybars~drop-links/997-rear-swaybar-assy- detail.htm [gefunden am 2015-12-08]
- Nigel: "ETS Drift Ute - Sway bar chat", Engineered to slide , 19. Mai 2012 (2012-05-19), Seite 2pp, XP002751945, Gefunden im Internet: URL:http://engineeredtoslide.com/2012/05/4 664/ [gefunden am 2015-12-08]

## Beschreibung

Die Erfindung betrifft eine Stabilisatorvorrichtung für ein Fahrwerk eines Kraftfahrzeugs, insbesondere einen Stabilisator oder einen Stabilenker für ein Fahrwerk eines Kraftfahrzeugs.

Stabilisatoren dienen im Fahrzeugbau (vgl. Fahrwerkhandbuch von Heissing et al., Kapitel 3.5.3.3, 4. Auflage 2013, Springer Vieweg Verlag) der Kopplung der Federbewegung gegenüberliegender Räder, insbesondere bei Kurvenfahrten, um so Wankbewegungen zu verhindern. Bei einer Wankbewegung des Aufbaus, d. h. einer gegensinnigen Einfederbewegung der Räder, wird der Stabilisator tordiert und liefert damit ein Rückstellmoment um die Wankachse, das die Aufbauneigung reduziert. Stabilisatoren sind daher nicht tragende Federelemente in Fahrzeugen, die im Gegensatz zu Tragfedern normalerweise nur während der Fahrphasen belastet werden.

Stabilisatoren stellen im Wesentlichen U-förmig geformte Bauteile dar. Der sogenannte Stabilisatorrücken liegt im eingebauten Zustand in Fahrzeugquerrichtung, während die beiden fest mit dem Stabilisatorrücken verbundenen Stabilisatorschenkel mehr oder weniger in Fahrzeuglängsrichtung zeigen. Werden diese Stabilisatoren nicht nur zur Wankstabilisierung des Fahrzeugs, sondern auch zur Rad- oder Achsführung genutzt, werden sie auch Führungsstabilisatoren oder Stabilenker genannt. Unter einem Stabilenker versteht man daher einen im Fahrwerk eines Kraftfahrzeugs verbauten Lenker zur Achsführung. Der Stabilenker kombiniert dadurch die Eigenschaften eines konventionellen Stabilisators mit den Funktionen der achsführenden Längslenker in einem Bauteil. Die Grundform des Stabilenkers und des Stabilisators sind im Wesentlichen gleich.

Der nachfolgend verwendete Begriff Stabilisatorvorrichtung soll somit sowohl einen Stabilisator als auch einen Stabilenker umfassen. Ferner gelten die nachfolgenden einen Stabilisator betreffenden Beschreibungen auch für einen Stabilenker und umgekehrt.

Nachteilig an den bekannten Stabilisatorvorrichtungen ist, dass die dadurch erzielte Stabilisierungswirkung des Fahrwerks nicht im Nachhinein angepasst werden kann, um beispielsweise die erzielte Stabilisierung an unterschiedliche Anforderungsbedingungen, z. B. Fahrbetrieb überwiegend bei guten Straßenverhältnissen versus Fahrbetrieb überwiegend bei schlechten Straßenverhältnissen, unterschiedliche Präferenzen von Fahrern, Veränderungen der Fahrzeugdynamik über die Zeit etc. anpassen zu können.

Aus dem Stand der Technik sind ferner Stabilsatorvorrichtungen bekannt, bei denen die erzielte Stabilisierungswirkung des Fahrwerks im Nachhinein angepasst werden kann. So offenbart beispielsweise die FR 2 626 819 A1 eine Stabilisatorvorrichtung, die einen schwertförmig ausgebildeten Arm aufweist, der mittels einer Aktuatorvorrichtung in seiner Rotationsstellung veränderbar ist. Auch die EP 2 070 743 A1 offenbart eine Stabilisatorvorrichtung, deren Arme mittels eines Aktuators drehbar sind, wobei die Arme einen Abschnitt aufweisen, dessen Querschnitt nicht kreisförmig ist. Auch die Offenlegungsschrift DE 10 2012 009 564 A1 offenbart eine Stabilisatorvorrichtung für ein Fahrzeug, aufweisend einen Federkraftstab, welcher an seinen beiden Enden jeweils einen Hebel zur Verbindung mit einer Radaufhängung des Fahrzeugs aufweist und wobei zumindest ein verstellbares Stabilisatorelement vorgesehen ist, welches einen zur Längsachse des Stabilisatorelements senkrechten Querschnitt mit unterschiedlichen Biegesteifigkeiten in wenigstens zwei Richtungen aufweist. Das Stabilisatorelement ist drehbar gelagert. Auch die Offenlegungsschrift FR 2 836 093 A1 offenbart eine Stabilisatorvorrichtung, die einen Schenkel aufweist, der einen quaderförmigen Querschnitt aufweist und drehbar ausgeführt ist. Die Druckschrift JP 2004 106654 A offenbart eine Stabilisatorvorrichtung, die Armteile aufweist, die durch ein Stellglied in verschiedene Drehpositionen drehbar sind, um die Biegesteifigkeit zu verändern.

Es ist somit eine Aufgabe der Erfindung, eine verbesserte Stabilisatorvorrichtung bereitzustellen, mit der Nachteile herkömmlicher Stabilisatorvorrichtungen vermieden werden können. Die Aufgabe der Erfindung ist es insbesondere, einen Stabilenker bzw. einen Stabilisator bereitzustellen, mit dem die Stabilisierung des Fahrzeugs flexibler an unterschiedliche Anforderungsbedingungen angepasst werden kann.

Diese Aufgaben werden durch eine Stabilisatorvorrichtung für ein Fahrwerk eines Kraftfahrzeugs gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Es wird eine Stabilisatorvorrichtung für ein Fahrwerk eines Kraftfahrzeugs, aufweisend einen Stabilisatorrücken und zwei Schenkel vorgeschlagen. Die Stabilisatorvorrichtung ist insbesondere ein Stabilisator oder Stabilenker für ein Fahrwerk eines Kraftfahrzeugs. Sofern nachfolgend der Begriff Stabilisator verwendet wird, sollen die diesbezüglichen Ausführungen somit ebenfalls für einen Stabilenker oder allgemein die Stabilisatorvorrichtung gelten. Die Stabilisatorvorrichtung stellt im Wesentlichen ein U-förmiges Bauteil dar, umfassend einen Stabilisatorrücken und zwei seitliche Schenkel.

Erfindungsgemäß weist zumindest einer der beiden Schenkel einen unrunden Querschnitt auf und ist zur Einstellung der Steifigkeit des Stabilisators in unterschiedlichen Drehstellungen zum Stabilisatorrücken festlegbar. In jeder der unterschiedlichen Drehstellungen ist der mindestens eine Schenkel drehfest am Stabilisatorrücken lösbar befestigt. Zur Änderung der Drehstellung wird die drehfeste Verbindung des Schenkels gelöst, der Schenkel um seine Längsachse in die gewünschte Drehstellung gedreht und in dieser Drehstellung wieder drehfest am Stabilisatorrücken befestigt.

Je nach Drehstellung ist der Schenkel somit um einen unterschiedlichen Winkel um seine Längsachse gedreht. Hierbei bleibt die Ausrichtung der Längsachse zum Stabilisatorrücken in allen unterschiedlichen Drehstellungen unverändert.

Bedingt durch den unrunden Querschnitt, d. h. eine von der Kreisform abweichenden Querschnittsform, erzeugt der Schenkel in unterschiedlichen Drehstellungen um seine Längsachse unterschiedliche Widerstandsmomente. Mit anderen Worten setzt der Schenkel je nach Drehstellung einer auf den Stabilisator in einer vorgegebenen Belastungsrichtung wirkenden Kraft somit einen höheren oder einen niedrigeren Widerstand entgegen, da der zumindest eine Schenkel in einer Drehstellung z. B. eine größere Biegesteifigkeit aufweist als in einer anderen Drehstellung. Es wird somit ein von der Drehstellung des Schenkels abhängiges Widerstandsmoment erzeugt.

Ein besonderer Vorzug der Erfindung liegt somit darin, dass die Stabilitätseigenschaften der Stabilisatorvorrichtung verstellbar sind und bei Bedarf angepasst werden können. Zeigt das Fahrzeug beispielsweise im Fahrbetrieb eine zu hohe Wankbewegung, könnte die Steifigkeit des Stabilisators durch entsprechende Veränderung der eingestellten Drehstellung des Schenkels oder der Schenkel erhöht werden. Zeigt das Fahrzeug andererseits im Fahrbetrieb eine zu hohe Steifigkeit, könnte entsprechend eine "weichere" Einstellung des Stabilisators durch Wahl einer anderen Drehstellung eingestellt werden.

Im Rahmen der Erfindung besteht die Möglichkeit, dass nur einer der beiden Schenkel in unterschiedlichen Drehstellungen zum Stabilisatorrücken festlegbar ist oder dass dies für beide Schenkel möglich ist. Die letztere Variante ermöglicht eine genauere Verstellbarkeit der Steifigkeit des Stabilisators.

Hierbei beziehen sich die unterschiedlichen Drehstellungen auf Drehstellungen bzw. die Ausrichtung der Schenkel in Bezug auf den Stabilisatorrücken, so dass die beiden Schenkel in der gleichen oder in unterschiedlichen Drehstellungen zum Stabilisatorrücken festgelegt werden können.

Ferner umfasst der Stabilisatorrücken zwei Hebelarme und einen Torsionskörper, an dessen beiden Enden je einer der Hebelarme drehfest angeordnet ist. An einem nicht am Torsionskörper befestigten Ende der Hebelarme ist jeweils einer der Schenkel in unterschiedlichen Drehstellungen festlegbar.

Das Vorsehen der Hebelarme ermöglicht zum einen durch entsprechende Dimensionierung der Hebellänge einen besonders flexiblen Einbau der Stabilisatorvorrichtung im in der Regel äußerst begrenzten freien Bauraum im Bereich der Achsaufhängung. Ferner ermöglichen die Hebelarme einen kostengünstigeren Herstellungsprozess, da zur Herstellung der einzelnen Bestandteile der Stabilisatorvorrichtung kleinere Werkzeuge verwendet werden können. Ferner wird die Handhabung der Bauteile erleichtert.

Ferner sind die Schenkel jeweils mittels einer ersten Verzahnung in unterschiedlichen Drehstellungen an dem jeweiligen Hebelarm festlegbar, und/oder
die Schenkel sind jeweils mittels einer zweiten Verzahnung in unterschiedlichen Drehstellungen an jeweils einer Befestigungseinrichtung festlegbar. Die Befestigungseinrichtung kann eine Befestigungseinrichtung zur achsseitigen oder rahmenseitigen Anbindung des Stabilisators sein, je nachdem, ob die Schenkel an einer Rad- bzw. Achsaufhängung oder an einem Fahrzeugaufbau befestigt werden.

Vorteilhafterweise ist die erste Verzahnung so ausgeführt, dass sie unterschiedliche Einraststellungen vorgibt, die vorgegebenen unterschiedlichen Drehstellungen der Schenkel entsprechen. Ebenso kann die zweite Verzahnung so ausgeführt sein, dass sie korrespondierende unterschiedliche Einraststellungen vorgibt, die den vorgegebenen unterschiedlichen Drehstellungen der Schenkel entsprechen. Dies vereinfacht die Einstellung unterschiedlicher Widerstandsmomente der Schenkel bzw. der Stabilisatorvorrichtung.

Die Hebelarme können sowohl senkrecht zum Torsionskörper als auch senkrecht zu den Schenkeln ausgerichtet sein. Hierbei sind die Hebelarme vorzugsweise im Wesentlichen parallel zueinander ausgerichtet. Ferner sind die beiden Schenkel vorzugsweise im Wesentlichen parallel zueinander ausgerichtet. Dies gilt für alle Drehstellungen, da die unterschiedlichen Drehstellungen der Schenkel jeweils nur eine Drehung der Schenkel um ihre Längsachse darstellen, aber die räumliche Ausrichtung der Längsachse der Schenkel unverändert lassen und damit auch deren Ausrichtung zu den Hebelarmen bzw. zu dem Torsionskörper.

Die erste Verzahnung kann durch ein am Hebelarm vorgesehenes Zahnrad mit Hirth-Verzahnung und einen am hebelarmseitigen Ende des Schenkels vorgesehenen ersten Verzahnungssteg, der mit der Hirth-Verzahnung in Eingriff bringbar ist, gebildet sein.

Ebenso kann die zweite Verzahnung durch ein an der Befestigungseinrichtung vorgesehenes zweites Zahnrad mit Hirth-Verzahnung und einen zweiten Verzahnungssteg, der an dem zum ersten Verzahnungssteg gegenüberliegenden Ende des Schenkels vorgesehen ist und der mit der Hirth-Verzahnung des zweiten Zahnrads in Eingriff bringbar ist, gebildet sein.

Die erste und/oder zweite Verzahnung ist vorteilhafterweise somit als axial wirksame, drehstarr ineinander eingreifende Verzahnung mit radial verlaufenden Zähnen ausgeführt, die eine stabile, formschlüssige, drehfeste und leicht lösbare Verbindung der Hebelarme ermöglicht und zugleich wenig Bauraum beansprucht.

Eine besonders vorteilhafte Möglichkeit der erfindungsgemäßen Realisierung sieht vor, die Schenkel als Profilkörper mit einem nicht-quadratischen Vierkantprofil, d. h. Rechteckprofil, auszuführen, was besonders einfach fertigungstechnisch herstellbar ist. Die Vierkantprofile können zudem zur Gewichtsreduzierung auch als Hohlbauteile ausgeführt sein.

Die Schenkel können jedoch auch als T-Profil oder I-Profil ausgeführt sein oder allgemein eine polygonale, ovale oder elliptische Querschnittsform aufweisen.

Eine weitere vorteilhafte Ausgestaltungsform der Erfindung sieht vor, dass der zumindest eine Schenkel wahlweise um 0°, 45° oder 90° um seine Längsachse gedreht zum Stabilisatorrücken festlegbar ist. Im Falle eines nicht-quadratischen Vierkantprofils entspricht dann beispielsweise eine Drehstellung um 0° einem höchsten Widerstandsmoment (falls in 0°-Stellung das Rechteckprofil hochkant steht) und damit der Einstellung des Stabilisators mit größter Steifigkeit. Die 45°-Stellung entspricht einer Situation mittleren Widerstandsmoments. Die 90°-Stellung entspricht dann einer Stellung mit niedrigstem Widerstandsmoment und damit der "weichsten" Einstellung des Stabilisators.

Insbesondere kann die vorgenannte Verzahnung so ausgeführt sein, dass der Verzahnungssteg jeweils um 0°, 45° oder 90° gedreht in der Hirth-Verzahnung lösbar drehfest in Eingriff bringbar ist, so dass eine Stabilisatorvorrichtung bereitgestellt werden kann, die in einfach zu handhabender Weise in drei Steifigkeitsgraden verstellbar ausgeführt ist. Die Verzahnung dient somit zugleich dazu, vorgegebene Einraststellungen festzulegen.

Im Rahmen der Erfindung besteht jedoch die Möglichkeit, dass abhängig von der konkreten Ausgestaltung des unrunden Querschnitts der Schenkel und der vorgesehenen Anzahl möglicher Drehstellungen entsprechend weniger oder bei Bedarf mehr einstellbare Steifigkeitseinstellungen der Stabilisatorvorrichtung bereitgestellt werden können.

Zur Gewichtsreduktion kann der Torsionskörper als Hohlrohr oder mit einer axialen Ausnehmung ausgebildet sein.

Gemäß dieser Variante kann an dem Torsionskörper an dessen beiden Enden jeweils ein Dreh- und Frästeil eingebracht und mit diesem verschweißt sein, wobei ein aus dem Hohlrohr herausragender Endabschnitt des Dreh- und Frästeils einen unrunden Querschnitt aufweist und in einer formkorrespondierenden durchgehenden Ausnehmung des zugeordneten Hebelarms formschlüssig drehfest gehaltert ist. Dies ermöglicht ein sicheres Anbringen der Hebelarme.

Zur Erhöhung der Festigkeit kann der in der Ausnehmung gehalterte Endabschnitt des Dreh- und Frästeils mit dem Hebelarm verschraubt sein. Ferner kann die erste Verzahnung mit einer axialen Verschraubung gesichert sein. Vorteilhafterweise kann auch die zweite Verzahnung mit einer axialen Verschraubung gesichert sein.

Gemäß einer weiteren Ausführungsform besteht die Möglichkeit, dass der zumindest eine in unterschiedlichen Drehstellungen festlegbare Schenkel mit einem Aktor verbunden ist und dass der Aktor zur Drehung des Schenkels um die Schenkellängsachse ausgebildet ist, um so den Schenkel in unterschiedlichen Drehstellungen zum Stabilisatorrücken festzulegen. In diesem Fall entfällt die axiale Verschraubung der ersten und zweiten Verzahnung. Ferner kann ein entsprechender Aktor zur Verstellung beider Schenkel vorgesehen sein.

Diese Variante bietet den Vorteil, dass keine manuelle Änderung der Drehstellung der Hebelarme vorgenommen werden muss, sondern die Verstellbarkeit der Stabilisatorsteifigkeit automatisiert durch den Aktor erfolgen kann.

Die Erfindung betrifft ferner ein Fahrzeug mit einer Stabilisatorvorrichtung wie hierin offenbart. Die Erfindung betrifft insbesondere ein Nutzfahrzeug mit einer derartigen Stabilisatorvorrichtung, wobei der Stabilisatorrücken vorzugsweise am Fahrzeug-Aufbau und die Schenkel vorzugsweise an der Vorderachse oder Radaufhängung des Nutzfahrzeugs befestigt sind.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: einen Stabilisator mit den Schenkeln in einer 0°-Drehstellung gemäß einer ersten Ausführungsform;
- Figur 1B: den Stabilisator der Figur 1A in einer 45°-Drehstellung;
- Figur 1C: den Stabilisator der Figur 1A in einer 90°-Drehstellung;
- Figur 2: einen Ausschnitt des Stabilisators in Explosionsdarstellung gemäß einer Ausführungsform der Erfindung;
- Figur 3: eine Schnittansicht des Stabilisatorrückens; und
- Figur 4: eine Schnittansicht durch einen Schenkel.

Alle Figuren zeigen denselben Stabilisator 100 bzw. Teilansichten hiervon. Gleiche Teile sind in den Figuren mit denselben Bezugszeichen versehen, so dass die in den Figuren gezeigten verschiedenen Ansichten des Stabilisators 100 auch aus sich heraus verständlich sind.

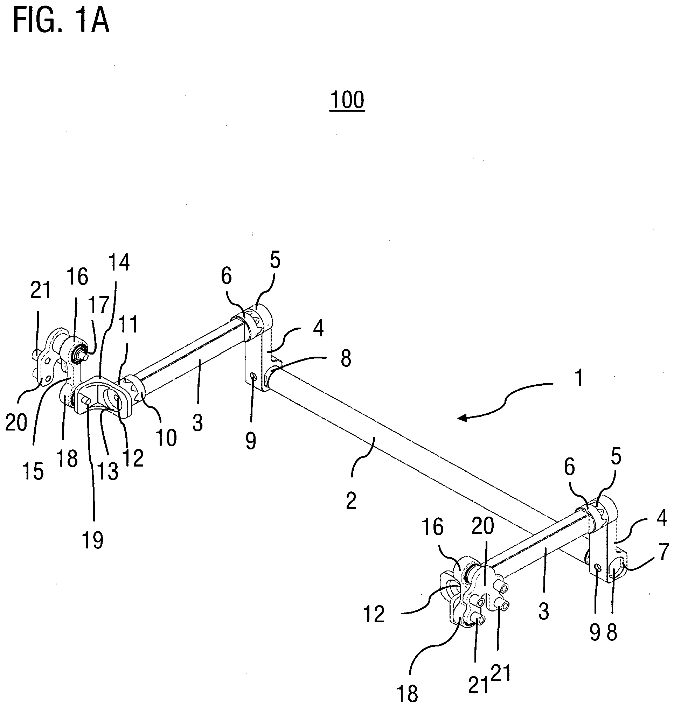

Figur 1A zeigt eine perspektivische Ansicht eines Ausführungsbeispiels des Stabilisators 100. Der Stabilisator 100 ist im Wesentlichen U-förmig ausgebildet und weist einen Stabilisatorrücken 1 und zwei Schenkel 3 auf, die auch als Arme bezeichnet werden.

Der Stabilisatorrücken 1 umfasst einen als Hohlrohr ausgeführten Torsionskörper 2 und zwei Hebelarme 4, die endseitig am Torsionskörper 2 drehfest und in senkrechter Ausrichtung angeordnet sind.

Die beiden Schenkel 3 sind als Vierkantprofile mit rechteckförmigem Querschnitt ausgeführt und über die Hebelarme 4 am Torsionskörper 2 befestigt.

Die beiden Schenkel 3 sind insbesondere in unterschiedlichen Drehstellungen zum Stabilisatorrücken 1 festlegbar, bei gleichbleibender senkrechter Ausrichtung zum Stabilisatorrücken 1. Hierzu können die Schenkel 3 jeweils mittels einer ersten Verzahnung 5, 5a, 6, 6a in unterschiedlichen Drehstellungen um ihre Längsachse an dem jeweiligen Hebelarm 4 lösbar drehfest befestigt werden. Ebenso können die Schenkel 3 mittels einer zweiten Verzahnung 10, 10a, 11, 11 a in unterschiedlichen Drehstellungen an jeweils einer Befestigungseinrichtung 14, 15, 20 zur achsseitigen Anbindung lösbar drehfest befestigt werden.

Figur 1A zeigt beispielsweise eine 0°-Drehstellung der Schenkel 3, in der die Vierkantprofile hochkant in Bezug auf die Längsachse der Hebelarme 4 ausgerichtet sind.

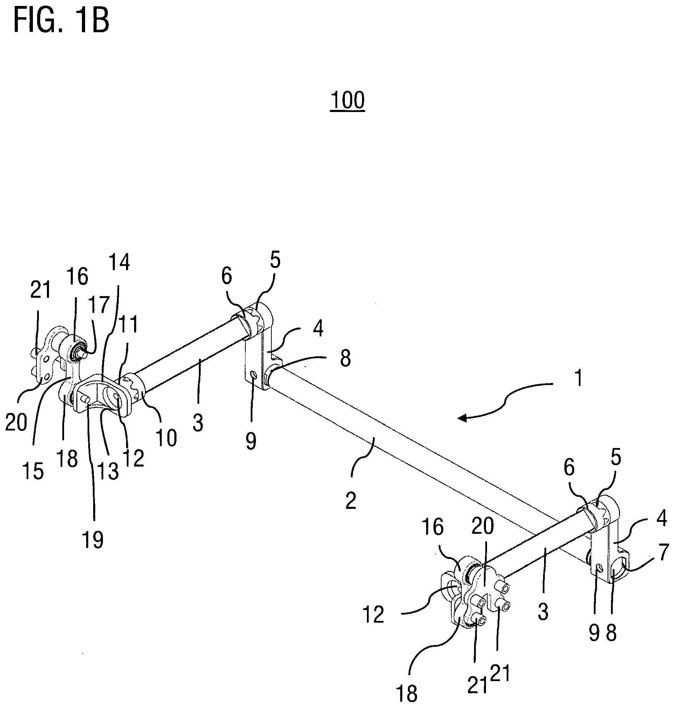

Figur 1B zeigt beispielsweise eine zweite Drehstellung, in der die Schenkel 3 zu einer Längsachse der Hebelarme 4 um 45° gedreht drehfest an den Hebelarmen 4 befestigt sind.

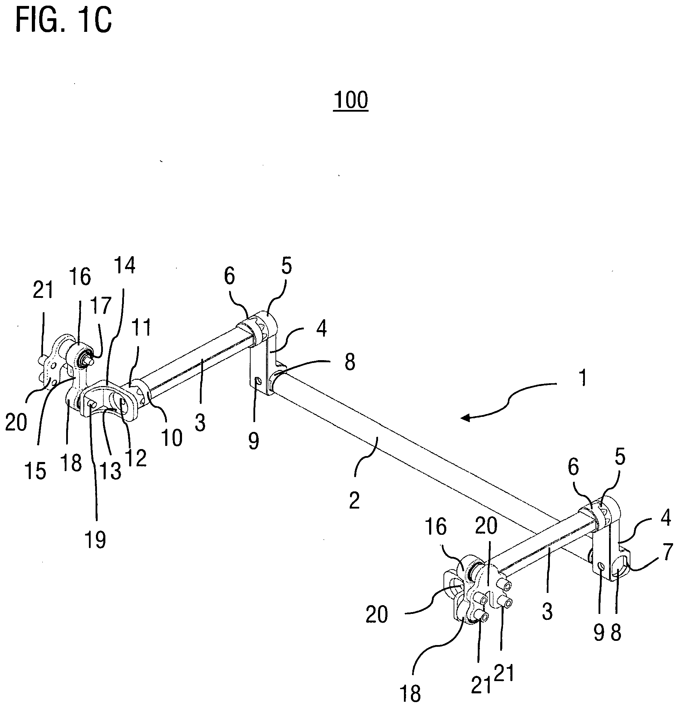

Figur 1C zeigt schließlich eine weitere Drehstellung, in der die Schenkel 3 um 90° in Bezug auf die Längsachse der Hebelarme 4 gedreht sind, so dass die längste Seitenfläche des Vierkantprofils horizontal ausgerichtet ist.

Abhängig von der Drehstellung der Hebelarme 3 erzeugen diese ein unterschiedliches Widerstandsmoment im eingebauten Zustand des Stabilisators 100, wenn auf diesen eine Kraft in einer Belastungsrichtung einwirkt. Hierbei stellt die 0°-Stellung in Figur 1A die steifeste Einstellung des Stabilisators 100 dar, da ein aufrechtstehendes Vierkantprofil in dieser Stellung die größte Biegesteifigkeit aufweist. Dagegen stellt die 90°-Stellung in Figur 1C die "weichste" Einstellung des Stabilisators 100 dar. Durch Verstellung der Ausrichtung der Vierkantprofile 3, beispielsweise in einer Werkstatt, ist es somit möglich, nachträglich die Steifigkeitseigenschaften der Stabilisatorvorrichtung 100 zu verändern.

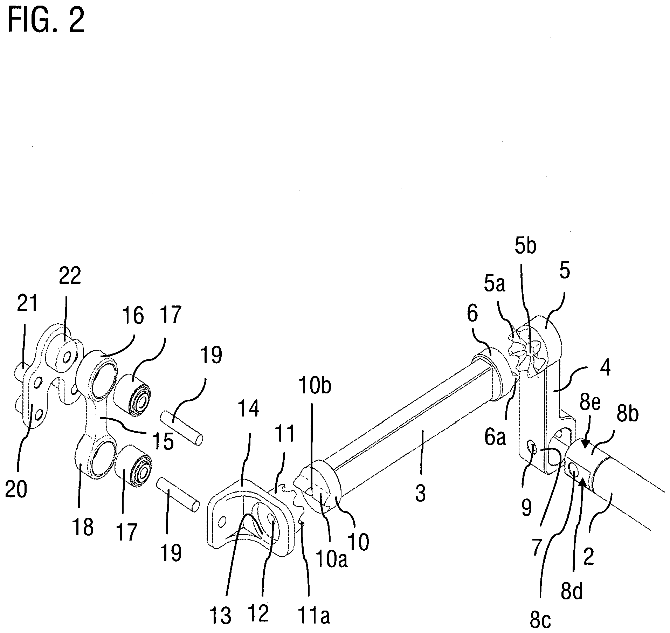

Die lösbare drehfeste Anbindung der Schenkel 3 am Stabilisatorrücken 1, mittels der unterschiedliche Drehstellungen der Schenkel 3 einstellbar sind, ist in der Detailansicht der Figur 2 in einer Explosionsdarstellung dargestellt.

Es ist zu erkennen, dass der Hebelarm 4 an einem oberen Ende 5 ein Zahnrad 5 mit einer Hirth-Verzahnung 5a aufweist. Hierzu korrespondierend ist das entsprechende Ende 6 des daran befestigten Schenkels 3 mit einem Verzahnungssteg 6a ausgeführt, der mit der Hirth-Verzahnung 5a wahlweise in drei unterschiedlichen Drehstellungen in Eingriff bringbar ist.

In Figur 2 ist eine horizontale Ausrichtung des Verzahnungsstegs 6a gezeigt, der zu der in Figur 1A gezeigten 0°-Ausrichtung des Vierkantprofils 3 führt. Der Verzahnungssteg 6a kann zusätzlich entweder um 45° gedreht oder um 90° gedreht in Eingriff mit der Hirth-Verzahnung 5a gebracht werden, wodurch sich die in den Figuren 1B und 1C ergebenden Drehstellungen ergeben.

Die Verzahnung 5, 5a, 6, 6a bildet somit eine axial wirksame, drehstarr ineinander eingreifende Verzahnung mit radial verlaufenden Zähnen aus, die zu einer drehfesten formschlüssigen, aber lösbaren Verbindung des Hebelarms 4 mit dem Schenkel 3 führt. In das Zahnrad 5 und in den Verzahnungssteg ist jeweils mittig eine Bohrung eingebracht, wobei in Figur 2 nur die Durchgangsbohrung 5b des Zahnrads 5 sichtbar ist. Im verzahnten Zustand sind die beiden Bohrungen zueinander fluchtend angeordnet und dienen zur axialen Verschraubung des Hebelarms 4 mit dem Schenkel 3, wenn diese über die Verzahnung im Eingriff stehen.

Vergleichbar zur ersten Verzahnung 5, 5a, 6, 6a ist das gegenüberliegende Ende des Schenkels 3 mit einer zweiten Verzahnung 10, 10a, 11, 11 a an der Befestigungsvorrichtung 14, 15, 20 ebenfalls lösbar drehfest befestigt.

Hierbei weist eine Winkelplatte 14 der Befestigungsvorrichtung ebenfalls ein Zahnrad 11 mit einer dem Schenkel 3 zugewandten Hirth-Verzahnung 11a auf. Das Zahnrad ist 11 ist baugleich zum Zahnrad 5 ausgeführt. Das Zahnrad 11 ist in eine kreisrunde Ausnehmung 13 der Winkelplatte 14 eingepasst und mit dieser verschweißt. Ferner ist an dem der Winkelplatte 14 zugewandten Ende 10 des Schenkels 3 ein zweiter Verzahnungssteg 10b vorgesehen, der mit der Hirth-Verzahnung 11a des zweiten Zahnrads 11 in Eingriff bringbar ist. Hierbei weist wiederum das zweite Zahnrad 11 eine zentrale Durchgangsbohrung 12 auf. Ebenfalls ist an dem Verzahnungssteg 10a eine mittig angeordnete Bohrung 10b vorgesehen. Im verzahnten Zustand sind die beiden Bohrungen zueinander fluchtend angeordnet und dienen zur axialen Verschraubung des Schenkels 3 mit der Winkelplatte 14.

Die Befestigungsvorrichtung 14, 15, 20 dient zur Anbindung des Stabilisators 100 an einer Vorderachse eines Nutzfahrzeugs. Die Erfindung ist hinsichtlich des konstruktiven Aufbaus der Befestigungsvorrichtung 14, 15, 20 nicht auf einen bestimmten Aufbau beschränkt. Allerdings kann die Befestigungsvorrichtung verschiedene Komponenten, die an sich aus dem Stand der Technik bekannt sind, umfassen, die nachfolgend kurz beschrieben werden.

Die Radbefestigung erfolgt über ein U-förmiges Radbefestigungselement 20, an dem auf der den Rädern zugewandten Seite 22 vier Befestigungshülsen 21 zur radseitigen Anbindung angeordnet sind. Das Radbefestigungselement 20 ist über eine Koppelstange 15 an der Winkelplatte 14 befestigt. Die Koppelstange 15 ist hantelfömig ausgebildet, aufweisend einen oberen 16 und unteren 18 Aufnahmering. In die Aufnahmeringe 16, 18 sind jeweils Gummilager 17 mit zentraler Durchgangsbohrung eingepasst, die zur Aufnahme der Schrauben 19 ausgebildet sind.

Die obere Schraube 19 dient zur Verschraubung der Koppelstange 15 mit der U-förmigen Radbefestigung 20, wobei der obere Aufnahmering 16 mittels der Schraube 19 mit einem zylinderförmigen Stopfen 22, der an der der Koppelstange 15 zugewandten Seite der Radbefestigung 20 angeordnet ist, verschraubt wird. Die untere Schraube 19 dient zum Verschrauben der Koppelstange 15 mit der Winkelplatte 14.

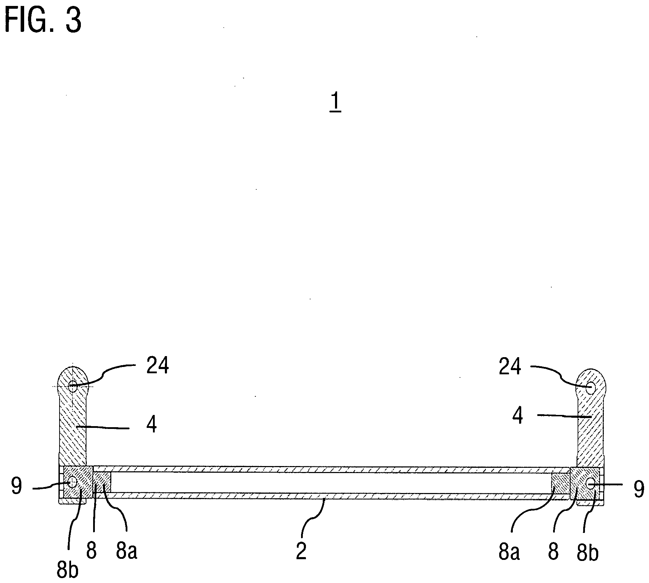

In Figur 2 (vgl. auch Figur 3) ist ferner zu sehen, dass in dem als Hohlrohr ausgeführten Torsionskörper 2 an dessen beiden Enden jeweils ein Dreh- und Frästeil 8 eingebracht ist, wobei in Figur 2 nur der aus dem Hohlrohr 2 herausragende Endabschnitt 8b des Dreh- und Frästeils sichtbar ist.

Dieser herausragende Abschnitt 8b weist einen unrunden Querschnitt auf, mit gerader Seitenkontur 8d und einer gerundeten oberen und unteren Kontur 8e. Dieser Endabschnitt 8b ist in einer formkorrespondierenden durchgehenden Ausnehmung 7 des zugeordneten Hebelarms 4 formschlüssig drehfest gehaltert. Diese Verbindung wird zusätzlich über eine Verschraubung gesichert. Hierzu weist der Endabschnitt 8b eine Durchgangsbohrung 8c auf. Ferner weist der Hebelarm in dem unteren Bereich der Ausnehmung 7 ebenfalls eine Durchgangsbohrung 9 auf. Die beiden Durchgangsbohrungen 8c, 9 sind zueinander fluchtend angeordnet, wenn der Endabschnitt 8b vollständig in die Ausnehmung 7 eingesteckt ist, so dass das Torsionsrohr 2 mit dem Hebelarm 4 über die Durchgangsbohrungen 8c, 9 verschraubt werden kann.

In Figur 3 ist eine Schnittansicht des Stabilisatorrückens 1 gezeigt. Hierbei ist zu erkennen, dass der Torsionskörper 2 als Hohlrohr ausgeführt ist. Die Dreh- und Frästeile 8 sind endseitig am Hohlrohr 2 mittels eines Stopfens 8a befestigt. Hierzu weist der Stopfen 8a einen an den Innendurchmesser des Torsionsrohrs 2 angepassten Durchmesser auf. Das Dreh- und Frästeil 8 ist mit dem Torsionsrohr 2 verschweißt.

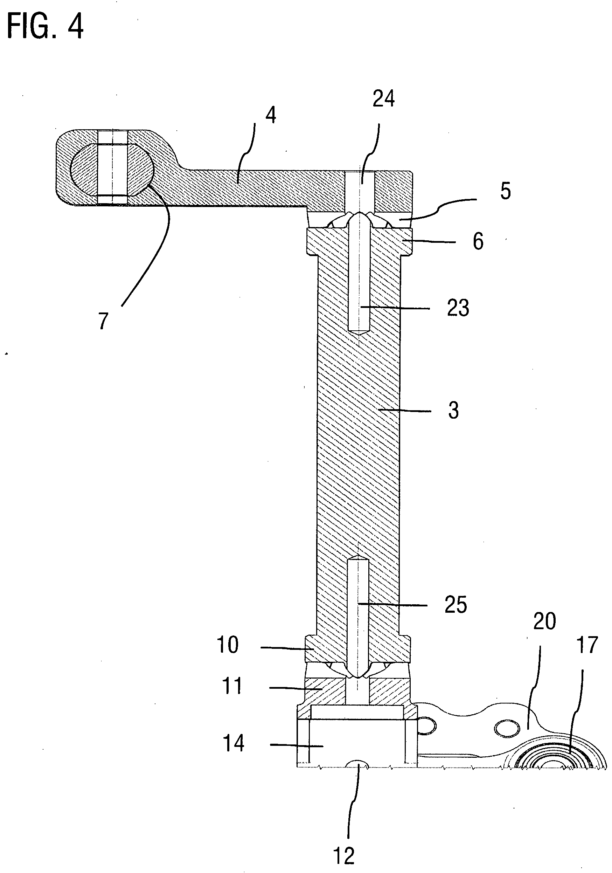

Die Schnittansicht der Figur 4 zeigt die zuvor erwähnte axiale Verschraubung des Schenkels 3 sowohl mit dem Hebelarm 4 als auch mit der Winkelplatte 14. Die axiale Verschraubung und Verspannung der ersten Verzahnung 5, 5a, 6, 6a und der zweiten Verzahnung 10, 10a, 11, 11a ist in dem gezeigten Beispiel jeweils durch eine zentrisch liegende Stiftschraube bewirkt. Diese werden durch die entsprechenden Durchgangsbohrungen 24 des Hebelarms bzw. der Winkelplatte 14 in hierzu fluchtend angeordnete Durchgangsbohrungen 23, 25 eingeführt, die sich von den Endbereichen 6, 10 mit den Verzahnungsstegen 6a, 10a hin zur Schenkelmitte 3 erstrecken. In die Durchgangsbohrungen 23, 25 ist jeweils ein Mutterngewinde eingearbeitet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Stabilisatorrücken
- 2: Torsionskörper
- 3: Schenkel
- 4: Hebelarm
- 5: Zahnrad
- 5a: Hirth-Verzahnung
- 5b: Durchgangsbohrung
- 6, 10: Endbereich des Schenkels
- 6a, 10a: Verzahnungssteg
- 7: Ausnehmung
- 8: Dreh- und Frästeil
- 8a: Stopfen
- 8b: Endbereich Dreh- und Frästeil
- 8c: Durchgangsbohrung
- 8d: Gerader Seitenkontur des Endbereichs
- 8e: Gerundete Außenkontur des Endbereichs
- 9, 10b: Durchgangsbohrung
- 11: Zahnrad mit Hirth-Verzahnung
- 11a: Hirth-Verzahnung
- 12: Durchgangbohrung
- 13: Kreisförmige Ausnehmung
- 14: Winkelplatte
- 15: Koppelstange
- 16, 18: Aufnahmering
- 17: Gummilager
- 19: Schraube
- 20: Radbefestigung
- 21: Hülse
- 22: Stopfen
- 23, 24, 25: Durchgangsbohrung
- 100: Stabilisatorvorrichtung

## Patentansprüche

1. Stabilisatorvorrichtung (100) für ein Fahrwerk eines Kraftfahrzeugs, insbesondere Stabilisator oder Stabilenker für ein Fahrwerk eines Kraftfahrzeugs, aufweisend einen Stabilisatorrücken (1) und zwei Schenkel (3), wobei zumindest einer der beiden Schenkel (3) einen unrunden Querschnitt aufweist und zur Einstellung der Steifigkeit der Stabilisatorvorrichtung in unterschiedlichen Drehstellungen zum Stabilisatorrücken festlegbar ist; wobei der Stabilisatorrücken (1) zwei Hebelarme (4) und einen Torsionskörper (2), an dessen beiden Enden je einer der Hebelarme (4) drehfest angeordnet ist, umfasst, wobei an einem nicht am Torsionskörper befestigten Ende der Hebelarme (4) jeweils einer der Schenkel (3) in unterschiedlichen Drehstellungen festlegbar ist,
**dadurch gekennzeichnet,**
(a) **dass** die Schenkel (3) jeweils mittels einer ersten Verzahnung (5, 5a, 6, 6a) in unterschiedlichen Drehstellungen an dem jeweiligem Hebelarm (4) festlegbar sind; und/oder
(b) **dass** die Schenkel (3) jeweils mittels einer zweiten Verzahnung (10,11) in unterschiedlichen Drehstellungen an jeweils einer Befestigungseinrichtung (14, 15, 20) zur achsseitigen oder rahmenseitigen Anbindung festlegbar sind.

2. Stabilisatorvorrichtung (100) nach Anspruch 1, **dadurch gekennzeichnet, dass** beide Schenkel (3) einen unrunden Querschnitt aufweisen und zur Einstellung der Steifigkeit der Stabilisatorvorrichtung (100) in unterschiedlichen Drehstellungen zum Stabilisatorrücken (1) festlegbar sind.

3. Stabilisatorvorrichtung nach Anspruch 1 oder 2, **dadurch gekennzeichnet, dass** die erste Verzahnung (5, 5a, 6, 6a) so ausgeführt ist, dass sie unterschiedliche Einraststellungen vorgibt, die vorgegebenen unterschiedlichen Drehstellungen der Schenkel (3) entsprechen.

4. Stabilisatorvorrichtung nach einem der Ansprüche 1 bis 3, **dadurch gekennzeichnet, dass** die Hebelarme (4) sowohl senkrecht zum Torsionskörper (2) als auch senkrecht zu den Schenkeln (3) ausgerichtet sind.

5. Stabilisatorvorrichtung nach einem der Ansprüche 1 bis 4, **dadurch gekennzeichnet,**
(a) **dass** die erste Verzahnung (5, 5a, 6, 6a) durch ein am Hebelarm (4) vorgesehenes Zahnrad (5) mit Hirth-Verzahnung (5a) und einen am hebelarmseitigen Ende (6) des Schenkels (3) vorgesehenen ersten Verzahnungssteg (6a), der mit der Hirth-Verzahnung (5a) in Eingriff bringbar ist, gebildet ist; und/oder
(b) **dass** die zweite Verzahnung (10, 10a, 11, 11a) durch ein an der Befestigungseinrichtung (14, 15, 20) vorgesehenes zweites Zahnrad (11) mit Hirth-Verzahnung (11a) und einen zweiten Verzahnungssteg (10b), der an einem der Befestigungseinrichtung zugewandten Ende (10) des Schenkels (3) vorgesehenen ist und der mit der Hirth-Verzahnung (11a) des zweiten Zahnrads (11) in Eingriff bringbar ist, gebildet ist.

6. Stabilisatorvorrichtung nach einem der vorhergehenden Ansprüche, **dadurch gekennzeichnet, dass** der zumindest eine Schenkel (3)
(a) ein nicht-quadratisches Vierkantprofil, ein T-Profil oder ein I-Profil aufweist; und/oder
(b) wahlweise um 0°, 45° oder 90° um seine Längsachse gedreht zum Stabilisatorrücken festlegbar ist.

7. Stabilisatorvorrichtung nach einem der vorhergehenden Ansprüche, **dadurch gekennzeichnet, dass** der Torsionskörper (2) als Hohlrohr ausgebildet ist, an dessen beiden Enden jeweils ein Dreh- und Frästeil (8) eingebracht und mit diesem verschweißt ist, wobei ein aus dem Hohlrohr (2) herausragender Endabschnitt (8b) des Dreh- und Frästeils einen unrunden Querschnitt aufweist und in einer formkorrespondierenden durchgehenden Ausnehmung (7) des zugeordneten Hebelarms (4) formschlüssig drehfest gehaltert ist.

8. Stabilisatorvorrichtung nach Anspruch 7, **dadurch gekennzeichnet, dass** der in der Ausnehmung (7) gehalterte Endabschnitt (8b) mit dem Hebelarm (4) verschraubt ist.

9. Stabilisatorvorrichtung nach einem der Ansprüche 1 bis 7, **dadurch gekennzeichnet,**
(a) **dass** die erste Verzahnung (5, 5a, 6, 6a) mit einer axialen Verschraubung (23) gesichert ist; und/oder
(b) **dass** die zweite Verzahnung (10, 10a, 11, 11a) mit einer axialen Verschraubung (25) gesichert ist.

10. Stabilisatorvorrichtung nach einem der vorhergehenden Ansprüche 1 bis 8, **dadurch gekennzeichnet, dass** der zumindest eine in unterschiedlichen Drehstellungen festlegbare Schenkel mit einem Aktor verbunden ist und dass der Aktor zur Drehung des Schenkels um seine Längsachse ausgebildet ist, um den Schenkel in unterschiedlichen Drehstellungen zum Stabilisatorrücken festzulegen.

11. Fahrzeug mit Stabilisatorvorrichtung (100) nach einem der vorhergehenden Ansprüche.

12. Fahrzeug nach Anspruch 11, das als Nutzfahrzeug ausgeführt ist, wobei der Stabilisatorrücken (1) am Fahrzeug-Aufbau und die Schenkel (3) an der Vorderachse befestigt sind.

## Claims

1. A stabiliser device (100) for a chassis of a motor vehicle, in particular a stabiliser or a stabiliser link for a chassis of a motor vehicle, comprising a stabiliser back (1) and two legs (3), wherein at least one of the two legs (3) has a non-circular cross section and is able to be fixed in different rotational positions to the stabiliser back for setting the stiffness of the stabiliser device; wherein the stabiliser back (1) comprises two lever arms (4) and a torsion member (2), each one of the lever arms (4) being respectively arranged fixedly in terms of rotation on the two ends thereof, wherein each one of the legs (3) is able to be respectively fixed in different rotational positions at one end of the lever arms (4) not fastened to the torsion member,
**characterized**
(a) **in that** in each case the legs (3) are able to be fixed by means of a first toothing (5, 5a, 6, 6a) in different rotational positions to the respective lever arm (4); and/or
(b) **in that** in each case the legs (3) are able to be fixed by means of a second toothing (10, 11) in different rotational positions to one respective fastening device (14, 15, 20), for attachment on the axle side or frame side.

2. The stabiliser device (100) according to Claim 1, **characterized in that** the two legs (3) have a non-circular cross section and are able to be fixed to the stabiliser back (1) for setting the stiffness of the stabiliser device (100) in different rotational positions.

3. The stabiliser device according to Claim 1 or 2, **characterized in that** the first toothing (5, 5a, 6, 6a) is designed so that it predetermines different engagement positions which correspond to predetermined different rotational positions of the legs (3).

4. The stabiliser device according to one of Claims 1 to 3, **characterized in that** the lever arms (4) are aligned both perpendicular to the torsion member (2) and perpendicular to the legs (3).

5. The stabiliser device according to one of Claims 1 to 4, **characterized,**
(a) **in that** the first toothing (5, 5a, 6, 6a) is formed by a toothed wheel (5) with Hirth-toothing (5a) provided on the lever arm (4) and a first toothing projection (6a) provided on the end (6) of the leg (3) on the lever arm side, said toothing projection being able to be brought into engagement with the Hirth-toothing (5a) ; and/or
(b) **in that** the second toothing (10, 10a, 11, 11a) is formed by a second toothed wheel (11) with Hirth-toothing (11a) provided on the fastening device (14, 15, 20) and a second toothing projection (10b) which is provided on an end (10) of the leg (3) facing the fastening device and which is able to be brought into engagement with the Hirth-toothing (11a) of the second toothed wheel (11).

6. The stabiliser device according to one of the preceding claims, **characterized in that** at least one leg (3)
(a) has a non-square, four-cornered profile, a T-shaped profile or an I-shaped profile; and/or
(b) is able to be fixed to the stabiliser back, optionally rotated by 0°, 45° or 90° about its longitudinal axis.

7. The stabiliser device according to one of the preceding claims, **characterized in that** the torsion member (2) is configured as a hollow tube, one respective rotary and milled part (8) being incorporated at both ends thereof and being welded thereto, wherein an end portion (8b) of the rotary and milled part protruding from the hollow tube (2) has a non-circular cross section and is positively held fixedly in terms of rotation in a continuous recess (7) of the assigned lever arm (4), of corresponding shape.

8. The stabiliser device according to Claim 7, **characterized in that** the end portion (8b) held in the recess (7) is screwed to the lever arm (4).

9. The stabiliser device according to one of Claims 1 to 7, **characterized**
(a) **in that** the first toothing (5, 5a, 6, 6a) is secured by an axial screw connection (23); and/or
(b) **in that** the second toothing (10, 10a, 11, 11a) is secured by an axial screw connection (25).

10. The stabiliser device according to one of the preceding Claims 1 to 8, **characterized in that** the at least one leg, which is able to be fixed in different rotational positions, is connected to an actuator and **in that** the actuator is configured for rotating the leg about its longitudinal axis in order to fix the leg to the stabiliser back in different rotational positions.

11. A vehicle comprising stabiliser device (100) according to one of the preceding claims.

12. The vehicle according to Claim 11, which is designed as a utility vehicle, wherein the stabiliser back (1) is fastened to the vehicle structure and the legs (3) are fastened to the front axle.

## Revendications

1. Dispositif stabilisateur (100) pour un châssis d'un véhicule automobile, en particulier stabilisateur ou bras de guidage pour un châssis d'un véhicule automobile, présentant un dos de stabilisateur (1) et deux branches (3), dans lequel au moins une des deux branches (3) présente une section transversale non ronde et peut être fixée dans différentes positions angulaires par rapport au dos de stabilisateur pour le réglage de la rigidité du dispositif stabilisateur; dans lequel le dos de stabilisateur (1) comprend deux bras de levier (4) et un corps de torsion (2), aux deux extrémités duquel est chaque fois agencé sans rotation un des bras de levier (4), dans lequel chaque fois une des branches (3) peut être fixée dans différentes positions angulaires à une extrémité des bras de levier (4) non fixée au corps de torsion, **caractérisé en ce que**
(a) les branches (3) peuvent être fixées respectivement au moyen d'une première denture (5, 5a, 6, 6a) dans différentes positions angulaires au bras de levier respectif (4); et/ou
(b) les branches (3) peuvent être fixées respectivement au moyen d'une deuxième denture (10, 11) dans différentes positions angulaires respectivement à un dispositif de fixation (14, 15, 20) en vue de la liaison côté essieu ou côté châssis.

2. Dispositif stabilisateur (100) selon la revendication 1, **caractérisé en ce que** les deux branches (3) présentent une section transversale non ronde et peuvent être fixées dans différentes positions angulaires par rapport au dos de stabilisateur (1) pour le réglage de la rigidité du dispositif stabilisateur (100).

3. Dispositif stabilisateur selon la revendication 1 ou 2, **caractérisé en ce que** la première denture (5, 5a, 6, 6a) est réalisée de telle manière qu'elle prévoie différentes positions d'encliquetage, qui correspondent à différentes positions angulaires prédéterminées des branches (3).

4. Dispositif stabilisateur selon l'une quelconque des revendications 1 à 3, **caractérisé en ce que** les bras de levier (4) sont orientés aussi bien perpendiculairement au corps de torsion (2) que perpendiculairement aux branches (3).

5. Dispositif stabilisateur selon l'une quelconque des revendications 1 à 4, **caractérisé en ce que**
(a) la première denture (5, 5a, 6, 6a) est formée par une roue dentée (5) prévue sur le bras de levier (4) avec une denture Hirth (5a) et une nervure de denture (6a) prévue sur l'extrémité côté bras de levier (6) de la branche (3), qui peut engrener avec la denture Hirth (5a) ; et/ou
(b) la deuxième denture (10, 10a, 11, 11a) est formée par une deuxième roue dentée (11) prévue sur le dispositif de fixation (14, 15, 20) avec une denture Hirth (11a) et une deuxième nervure de denture (10b), qui est prévue sur une extrémité (10) de la branche (3) tournée vers le dispositif de fixation et qui peut engrener avec la denture Hirth (11a) de la deuxième roue dentée (11).

6. Dispositif stabilisateur selon l'une quelconque des revendications précédentes, **caractérisé en ce que** ladite au moins une branche (3)
(a) présente un profil à quatre pans non carré, un profil en T ou un profil en I; et/ou
(b) peut être fixée en position tournée au choix de 0°, 45°, ou 90° autour de son axe longitudinal par rapport au dos de stabilisateur.

7. Dispositif stabilisateur selon l'une quelconque des revendications précédentes, **caractérisé en ce que** le corps de torsion (2) est réalisé sous forme de tube creux, aux deux extrémités duquel une pièce tournée et fraisée (8) est respectivement introduite et est soudée à celui-ci, dans lequel une partie d'extrémité (8b) de la pièce tournée et fraisée sortant hors du tube creux (2) présente une section transversale non ronde et est maintenue sans rotation par emboîtement dans un évidement continu de forme correspondante (7) du bras de levier associé (4).

8. Dispositif stabilisateur selon la revendication 7, **caractérisé en ce que** la partie d'extrémité (8b) maintenue dans l'évidement (7) est vissée au bras de levier (4).

9. Dispositif stabilisateur selon l'une quelconque des revendications 1 à 7, **caractérisé en ce que**
(a) la première denture (5, 5a, 6, 6a) est bloquée avec un vissage axial (23); et/ou
(b) la deuxième denture (10, 10a, 11, 11a) est bloquée avec un vissage axial (25).

10. Dispositif stabilisateur selon l'une quelconque des revendications 1 à 8, **caractérisé en ce que** ladite au moins une branche pouvant être fixée dans différentes positions angulaires est reliée à un actionneur et **en ce que** l'actionneur est configuré pour faire tourner la branche autour de son axe longitudinal, afin de fixer la branche dans différentes positions angulaires par rapport au dos de stabilisateur.

11. Véhicule avec un dispositif stabilisateur (100) selon l'une quelconque des revendications précédentes.

12. Véhicule selon la revendication 11, qui est réalisé en tant que véhicule utilitaire, dans lequel le dos de stabilisateur (1) est fixé à la superstructure du véhicule et les branches (3) sont fixées à l'essieu avant.
